(19) Europäisches Patentamt
European Patent Office
Office européen des brevets

(11) Numéro de publication: **0 197 863**
**B1**

(12) # FASCICULE DE BREVET EUROPÉEN

(45) Date de publication du fascicule du brevet: **12.10.88**

(51) Int. Cl.⁴: **C 08 G 77/62**

(21) Numéro de dépôt: **86420054.8**

(22) Date de dépôt: **20.02.86**

(54) **Procédé de préparation d'organopolysilazanes et d'organopoly(disilyl)silazanes de tenue thermique améliorée et son utilisation notamment comme précurseur de céramique.**

(30) Priorité: **27.02.85 FR 8502805**

(43) Date de publication de la demande:
**15.10.86 Bulletin 86/42**

(45) Mention de la délivrance du brevet:
**12.10.88 Bulletin 88/41**

(84) Etats contractants désignés:
**AT BE CH DE FR GB IT LI LU NL SE**

(56) Documents cité:
**FR-A-1 453 660**
**US-A-3 518 289**

(73) Titulaire: **RHONE- POULENC CHIMIE, 25, quai Paul Doumer, F-92408 Courbevoie Cédex (FR)**

(72) Inventeur: **Lebrun, Jean- Jacques, 24, rue Pierre Brunier, F-69300 Caluire (FR)**
Inventeur: **Porte, Hugues, 65, rue de Sèze, F-69006 Lyon (FR)**

(74) Mandataire: **Dubruc, Philippe, RHONE- POULENC INTERSERVICES Service Brevets Chimie 25, quai Paul- Doumer, F-92408 Courbevoie Cédex (FR)**

**EP 0 197 863 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'organopolysilazanes et d'organopoly(disilyl)silazanes de tenue thermique améliorée et son utilisation notamment comme precurseur de céramique.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Ils peuvent être également filés en fibres continues dont la pyrolyse aboutit à des fibres céramiques.

Ils peuvent être également mis sous forme de pellicules plus ou moins minces, de pièces massives moulées comme liant pour fibre céramique ou fibre de carbone et comme liant de frittage pour pièces céramiques poreuses. La mise en oeuvre de ces polysilazanes constitue un de leurs avantages principaux.

Il est rependant souhaitable et c'est le but de la présente invention de pouvoir disposer facilement d'un polysilazane qui soit assez stable à l'hydrolyse et surtout qui conduise, après pyrolyse, au matériau céramique avec un rendement pondéral éleve. Il est nécessaire pour cela que le polysilazane présente lors de la pyrolyse une tenue thermique qui peut être apportée par un haut poids moléculaire et/ou une viscosité élevée, allant jusqu'à l'état solide.

Dans la demande de brevet japonais JP-A-52 160 446, on décrit un procédé de polymérisation d'organopolysilazanes de haut poids moléculaire en utilisant comme catalyseur de traitement des organopolysilazanes, des terres acides. Ce procédé présente cependant l'inconvénient majeur de nécessiter la séparation du catalyseur solide par filtration impliquant l'emploi de solvant dans le cas de polymères atteignant des viscosité élevées.

La présente invention permet précisément d'atteindre le but visé mentionné ci-dessus sans présenter l'inconvénient inhérent à la catalyse hétérogène.

Elle concerne en effet un procédé de traitement d'un polysilazane, caractérisé en ce qu'on traite catalytiquement en phase homogène un polysilazane choisi parmi un organopolysilazane et un organopoly(disilyl)silazane et leurs mélanges, dans lesquels les radicaux organiques liés aux atomes de silicium sont des radicaux hydrocarbonés saturés ou aromatiques et exempts d'atome d'hydrogène lié directement aux atomes de silicium, en présence d'une quantité catalytiquement efficace d'un catalyseur acide choisi parmi $HClO_4$ et $CF_3SO_3H$.

Comme organopolysilazane on peut utiliser n'importe quel produit de réaction (a) d'au moins un organohalogénosilane de formule:

$$R_aX_{4-a}Si \qquad (I)$$

dans laquelle les radicaux R identiques ou différents sont choisis parmi un radical alkyle linéaire ou ramifié éventuellement halogéné ayant de 1 à 12 atomes de carbone, un radical cycloalkyle avant de 5 à 7 atomes de carbone et un radical aryle tel que le radical phényle et naphtyle, un radical arylalkyle ou alkylaryle dont la partie alkyle linéaire ou ramifiée comporte de 1 à 6 atomes de carbone, les radicaux R étant différents de l'atome d'hydrogène et a étant 0, 1, 2 ou 3, sur

(b) un compose organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle; R cycloalkyle: on peut citer les radicaux cyclopentyle, cyclohexyle et cycloheptyle; R arylalkyle, les radicaux benzyle, phénylethyle: R alkylaryle, les radicaux tolyle et xylyle.

X est un halogène qui est généralement l'atome de chlore.

Comme organohalogénosilane utilisable seul ou en mélange on peut citer:

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$

Ces polysilazanes sont bien connus et aisés à préparer. Ils englobent plus spécifiquement:
- les polymères linéaires répondant aux formules:

$$H_2N\ (R_2SiNH)_p\ SiR_2\ NH_2 \qquad (II)$$

et

$R_3SiNH(R_2SiNH)_{p'}SiR_3$ (III)

dans lesquels R a la signification ci-dessus; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR-A-1 086 932, brevet américain US-A-2 564 674).

De façon générale, la réaction d'organohalogénosilane sur une organoamine est décrite dans les brevets américains US-A-3 853 567 et 3 892 583 et la réaction d'organohalogénosilane sur un disilazane est décrite dans le brevet belge BE-A-888 787.

- les polymères cycliques répondant à la formule:

$(R_2\,SiNH)_n$ (IV)

dans laquelle n est compris entre 3 et 10, généralement n = 3 ou 4 et R a la signification donnée pour la formule (I) ci-dessus. Ils sont décrits notamment dans le brevet britannique GB-A-881 178.

- les polymères résineux formés de motifs choisis parmi ceux de formule $R_3\,SiNH_{0,5}$, $R_2\,SiNH$, $R\,SiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A-1 379 243, FR-A-1 392 853 et FR-A-1 393 728).

Ces polymères résineux renferment en quantité prépondérante des liaisons Si-NH-Si et en quantité moindre des liaisons $SiNH_2$ et comportant parfois en dehors des polymères réticulés, des polymères linéaires et cycliques; ces derniers ne pouvant se former que si, parmi les organochlorosilanes de départ se trouvent des diorganodichlorosilanes.

Les organopoly(disilyl)silazanes peuvent être préparés par action (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc... sur (b) au moins un organohalogénodisilane de formule:

$R_b\,X_{3-b}\,Si\,Si\,R_c\,X_{3-c}$ (V)

dans laquelle les radicaux R identiques ou différents ont la même signification que ci-dessus et b est égal à 0,1, 2 ou 3 et c est égal à 0, 1 ou 2 et X est un halogène, généralement le chlore.

Comme exemple de composés de formule (V) on peut citer:

$(CH_3)_2\,ClSiSi\,(CH_3)_2\,Cl$, $(CH_3)_2Cl\,SiSi\,CH_3\,Cl_2$, $CH_3\,Cl_2\,SiSi\,CH_3\,Cl_2$

Comme exemples de composés comportant au moins un groupement $NH_2$ ou NH et utilisable pour la synthèse des polysilazanes ci-dessus, on peut citer: l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane; le tétraphényldiméthyldisilazane, le tétraméthydivinyldisilazane, le diméthyldiphényldivinyldisilazane et le tétraméthyldisilazane.

La réaction d'halogénodisilane, en présence éventuellement d'halogénosilane, sur l'ammoniac est décrite dans le brevet européen EP-A-75 826. La réaction d'halogénodisilane sur un disilazane est décrite dans le brevet français FR-A-2 497 812. Tous les documents ci-dessus de préparation de polysilazanes sont cités comme référence.

Comme décrit dans le brevet EP-A-75 826, il est possible de préparer des organopoly [(disilyl)silazanes] par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Dans ce qui suit la fonctionnalité f des halogénosilanes ou halogénodisilanes de départ et la fonctionnalité moyenne $f^{N}_{m}$ des aminolysats de départ ou traités selon le procédé de l'invention sont définies de la façon suivante:

- Pour les halogénosilanes, la fonctionnalité f est égale au nombre d'halogènes liés directement au silicium, f variant de 0 à 4:

Exemple : $(CH_3)_2\,SiCl_2$ f = 2.

- Pour les halogénodisilanes, on considère le motif Si-Si comme une entité propre, c'est-à-dire que la fonctionnalité est égale au nombre d'halogènes liés directement à cette entité et peut varier de 0 à 6:

Exemple : $CH_3Cl_2SiSi\ Cl_2\ CH_3$ f = 4.

Dans les aminolysats, on transpose la notion de fonctionnalité en définissant une fonctionnalité $f^N = 1$ apportée par une liaison
≡ Si-N

Ainsi, dans les aminolysats, du type polysilazane, on distingue les motifs:

$M^N$ : 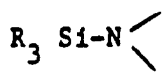 $f^N = 1$

considéré comme monofonctionnel

$D^N$ : 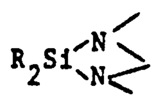 $f^N = 2$

considéré comme difonctionnel

$T^N$ : 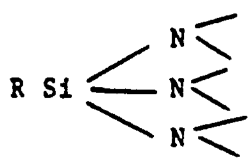 $f^N = 3$

considéré comme trifonctionnel

et $Q^N$:

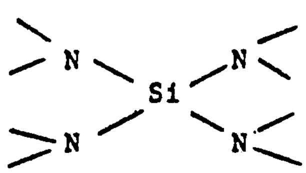 $f^N = 4$

considéré comme tétrafonctionnel.

Pour les aminolysats du type poly(disilyl)silazane, la fonctionnalité $f^N$ des motifs disilyle est calculée comme celle des halogénodisilanes en considérant les substituants azotés à la place des atomes d'halogène.

La fonctionnalité moyenne $f^N{}_m$ des aminolysats est calculée à partir des pourcentages molaires des différents motifs composant l'aminolysat pondérés de leur fonctionnalité propre; ainsi pour n motifs différents:

$$f_m^N = \frac{\sum_{i=1}^{i=n} (\%\ \text{molaire})_i \times f_i}{100}$$

Exemple : aminolysat ayant % molaire $D^N = 60$
% molaire $T^N = 40$

$$f_m^N = \frac{60 \times 2 + 40 \times 3}{100} = 2,4$$

Les aminolysats de départ sont généralement sous forme liquide de viscosité faible ou élevée, ou même à l'état pateux, allant jusqu'à l'état solide.

Or, ces aminolysats comportent généralement une teneur qui peut être importante en espèces de faible masse moléculaire susceptibles d'être vaporisées lors de la pyrolyse et par conséquent de diminuer d'autant le rendement pondéral en produit céramique ramené au produit de départ.

En plus, ces aminolysats, en particulier dans le cas où ils comportent une teneur élevée en silicium difonctionnel (par exemple $D^N$), ne sont pas suffisamment stables thermiquement lors de la pyrolyse; ils se dégradent par rupture des liaisons:

$$\equiv Si - NH \text{ ou } \equiv Si - N<$$

pour donner naissance à des oligomères volatils diminuant d'autant le rendement pondéral en produit céramique ramené au produit de départ.

De façon tout à fait inattendue, le procédé de l'invention comportant un traitement en catalyse acide homogène permet d'une part d'incorporer les volatils dans les macromolécules de l'aminolyset et d'autre part en présence de motifs trifonctionnels siliciés (par exemple $T^N$) de réarranger et de surréticuler le réseau de l'aminolysat qui de ce fait est thermiquement plus stable lors de la pyrolyse. Le traitement catalytique de l'invention provoque donc, suivant la nature de l'aminolysat de départ, une polymérisation et/ou une copolymérisation et/ou un réarrangement des molécules.

Un autre avantage très important découlant du traitement acide selon l'invention est l'obtention d'un aminolysat traité ayant une résistance améliorée à l'oxygène et à l'humidité de l'air.

Le catalyseur est généralement utilisé à des concentrations comprises entre 1 ppm et 10 000 ppm d'acide ramené au polysilazane de départ et de préférence entre 10 ppm et 5000 ppm.

La température de polymérisation est comprise entre 20° C et 180° C, de préférence entre 120° C et 160° C.

Le réaction peut être conduite en masse, ce qui représente un net avantage. On peut toutefois utiliser un solvant organique tel que le toluène, le chlorure de méthylène, le benzène, le xylène, l'hexane, l'heptane, etc. ... La réaction peut être conduite à pression atmosphérique, sous pression ou sous pression réduite. La durée de la réaction est bien entendu fonction de la concentration en catalyseur et de la température de la réaction. Pour une température comprise entre 120 et 160° C et une concentration en acide comprise entre 10 et 5000 ppm, la durée de la polymérisation est avantageusement comprise entre 30 min. et 30 h.

De façon tout à fait surprenante et inattendue, la présente invention a permis de mettre en évidence que seuls 2 acides forts conviennent, à savoir $HClO_4$ et surtout $CF_3SO_3H$. D'autres acides forts comme HF, $H_2SO_4$ et $CCl_3$ COOH ne permettent pas d'aboutir au résultat visé.

Le procédé de l'invention peut être effectué sur des polysilazanes divers utilisés seuls ou en mélange par exemple sur des organopoly(disilyl)silazanes ou des organopolysilazanes de différentes natures: on peut ainsi effectuer notamment:

- une polymérisation de l'aminolysat de $(CH_3)_2SiCl_2$
- une polymérisation de l'aminolysat de $(CH_3)_2ClSiSiCl(CH_3)_2$
- une copolymérisation d'aminolysat de $(CH_3)_2SiCl_2$ et de l'aminolysat de $CH_3SiCl_3$
- un réarrangement d'un polydiméthylsilazane en présence d'un aminolysat de $CH_3SiCl_3$
- un réarrangement d'un coaminolysat de $(CH_3)_2SiCl_2$ et de $CH_3SiCl_3$
- un réarrangement d'un coaminolysat de $(CH_3)_2SiCl_2$ et de $(CH_3)_{3-b}Cl_bSi\,Si\,Cl_c\,(CH_3)_{3-c}$

b et c étant définis comme dans la formule (V) ci-dessus avec de plus une fonctionnalité moyenne $f^N{}_m > 2$.

En fin d'opération, le mélange réactionnel est désactivé par tout moyen convenable, par exemple par introduction d'un composé basique tel que $NH_3$, $Et_3N$, etc. ... au sein du mélange réactionnel.

Dans les exemples suivants, illustrant l'invention sans en limiter la portée, on analyse les polysilazanes obtenus traités catalytiquement ou non traités par thermogravimétrie dynamique (TGA) en les pyrolysant de la température ambiante (20° C) à 1400° C sous azote avec une vitesse de montée en température de 2° C/min. On indique dans les exemples le rendement TGA (% en poids de résidu solide à 1300 - 1400° C). On calcule une formule brute:

$$(CH_3)_x\,Si\,(NH)_y$$

qui en théorie est susceptible de donner après pyrolyse

$$\alpha(Si_3N_4) + \beta\,SiC$$

si $y < 4/3$ $\quad \alpha = 3y/4$ et $\beta = 1 - \alpha$

si $y \geqslant 4/3$ $\quad \alpha = 1$ et $\beta = 0$.

Les halogénosilanes et les polysilazanes étant sensibles à l'humidité, toutes les manipulations sont effectuées sous atmosphère inerte ($N_2$ sec) afin d'éviter, par hydrolyse, la formation de liaison siloxane préjudiciable à la qualité de la céramique (formation de silice lors de la pyrolyse).

La viscosité est mesurée à 25° C et est donnée en mPa.s.

**Exemples 1 à 9**

On utilise l'hexaméthylcyclotrisilazane $D^N_3$ ($D^N$ = $-Si(CH_3)_2NH-$) obtenu par réaction du diméthyldichlorosilane $(CH_3)_2SiCl_2$ sur $NH_3$.

Ledit produit étant rectifié, on récupère la fraction dont le point d'ébullition est 188°C et le point de fusion -10°C. On le sèche sur $CaCl_2$.

L'appareillage utilisé est un réacteur de 3 l muni d'une agitation mécanique, d'un réfrigérant vertical et d'un thermomètre. Le réacteur est purgé à l'azote sec. Le $D^N_3$ (4,2 moles) exempt d'eau est introduit sous $N_2$ et porté à la température désirée pour la réaction. Le catalyseur est alors ajouté à la seringue à travers un bouchon à jupe.

Le mélange réactionnel est désactivé au moment voulu par addition d'ammoniac ou de triéthylamine.

Les résultat sont rassemblés dans le tableau I ci-après.

**Tableau I**

| Ex. | Catalyseur formule | Catalyseur teneur (ppm) | Température °C | Durée de la réaction (heures) | RR* Polymère % |
|---|---|---|---|---|---|
| 1 | HF (à 40 % dans $H_2O$) | 600 | 140 | 18 | 0 |
| 2 | $H_2SO_4$ | 980 | 155 | 18 | 0 |
| 3 | $H_3C\ C_6H_4\ SO_3H,\ H_2O$ | 690 | 120 | 18 | 0 |
| 4 | $CCl_3COOH$ | 330 | 150 | 18 | 0 |
| 5 | $CH_3\ SO_3\ H$ | 385 | 145 | 18 | 0 |
| 6 | $CF_3\ COOH$ | 460 | 110 | 10 | 0 |
| $7_1$ | $HClO_4$ dans $(CH_3CO)_2O$ | 400 | 140 | 16 | 7 |
| $7_2$ | $HClO_4$ dans $(CH_3\ CO)_2O$ | 5000 | 140 | 20 | 30 |
| 8 | $CF_3\ SO_3\ H$ | 300 | 165 | 18 | 57 |
| 9 | $CF_3\ SO_3\ H$ | 4500 | 170 | 24 | 90 |

*RR en polymère: Le rendement en polymère est mesuré de la manière suivante: on introduit exactement 2 g de produit dans un bécher (manipulation sous $N_2$ sec) que l'on porte à 175°C durant 2 h sous un vide de 1,3 mbar. Après refroidissement, le bécher est pesé ce qui permet de mesurer le rendement en polymère.

Du tableau I, il ressort clairement que seul $HClO_4$ et encore plus $CF_3SO_3H$ ont une action bénétique et provoquent la polymérisation des cyclosilazanes.

**Exemples 10 et 11**

On reproduit exactement le mode opératoire de l'exemple 1 sauf que l'on effectue la polymérisation en milieu solvant et à différentes températures. Les résultats sont rassemblés dans le tableau II, le catalyseur utilisé étant $CF_3\ SO_3\ H$ à une teneur de 4500 ppm.

**Tableau II**

| Ex. | Concentration en $D^N_3$ mole. $kg^{-1}$ | Solvant | Température °C | Durée de la réaction (heures) | RR Polymère % |
|---|---|---|---|---|---|
| 10 | 3,0 | $CH_2Cl_2$ | 60 | 22 | 46 |
| 11 | 3,0 | $(C_6H_5)CH_3$ | 125 | 22 | 71 |

La polymérisation s'effectue correctement en milieu solvant, toutefois le rendement chute si l'on opère à plus basse température.

**Exemple 12**

L'ammonolysat de $(CH_3)_2ClSiSiCl(CH_3)_2$, obtenu selon le mode opératoire décrit dans l'exemple 22, est principalement composé des produits:

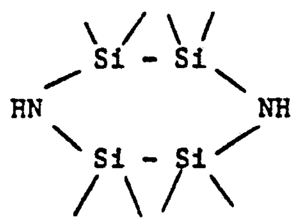

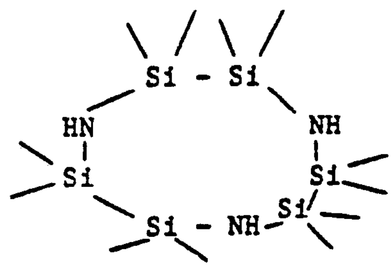

Ces organo(disilyl)silazanes peuvent être polymérisés dans les mêmes conditions que celles décrites dans les exemples 1 à 11 et les résultats obtenus sont rassemblés dans le tableau III ci-après:

**Tableau III**

| Ex. | Type de polymérisation | Teneur en $CF_3SO_3H$ (ppm) | Température °C | Durée de la réaction (heures) | RR Polymère % |
|---|---|---|---|---|---|
| 12 | en masse | 1800 | 170 | 24 | 50 |

**Exemples 13, 14 et 15**

Pour ces exemples, on effectue une coammonolyse en milieu solvant de $(CH_3)_2SiCl_2$ et $CH_3SiCl_3$.

Dans un réacteur de 3 l double enveloppe muni d'une agitation mécanique, d'un tube d'entrée de gaz et d'un condenseur on introduit sous azote sec:

- 0,72 mole de $(CH_3)_2$ $SiCl_2$ (92,5 g) et 0,72 mole de $CH_3SiCl_3$ (107,2 g), soit une fonctionnalité moyenne théorique du coammolysat = 2.5 (exemples 13 et 14)

- 0,48 mole de $(CH_3)_2SiCl_2$ (61,9 g) et 0,96 mole de $CH_3SiCl_3$ (143.5 g), soit une fonctionnalité moyenne théorique du coammonolysat = 2.67 (exemple 15) en présence de 1,1 l d'éther isopropylique pour les exemples 13 et 15 ou 1,1 l de toluène séché sur tamis moléculaire pour l'exemple 14. Le mélange est maintenu à température ambiante (exemples 13 et 14) ou est refroidi à 3°C et est maintenu à cette température pendant l'introduction de $NH_3$ gazeux (exemple 15) - réaction légèrement exothermique. Le débit d'introduction de $NH_3$ est maintenu à environ 6 ml/s de gaz et l'addition a lieu en 6 h.

Il se forme au cours de l'essai des quantités importantes de chlorhydrate d'ammonium qui épaississent la solution. En fin d'essai, on filtre le $NH_4Cl$ formé sur verre fritté (diamètre moyen des pores 10 µm). Le précipité est lavé plusieurs fois à l'aide de solvant sec. La solution récupérée est limpide. Les solvants sont évaporés sous vide (25 mbar à 70°C) et les dernières traces de solvant sont éliminées à 70°C sous 2 mbars.

Les caractéristiques des produits sont portées dans le tableau IV ci-après.

**Exemples 16, 17 et 18**

Dans ces exemples, on traite les coammonolysats des exemples 13, 14 et 15 par l'acide trifluorouéthane sulfonique $CF_3SO_3H$ (4500 ppm) en masse ou en solution.

Les conditions opératoires et les résultats sont regroupés dans le tableau V ci-après.

**Tableau IV**

| Ex. | T(°C) d'ammonolyse | Solvant | % molaire $(CH_3)_2Si\ Cl_2$ | % molaire $CH_3SiCl_3$ | Rdt % en coammolysat | Viscosité mPa.s | % $D^{N*}$ | % $T^{N*}$ | Rdt TGA % |
|---|---|---|---|---|---|---|---|---|---|
| 13 | 21°C | Ether iso | 50 | 50 | 92,3 | 90 | 49 | 51 | 33 |
| 14 | 20°C | Toluène | 50 | 50 | 85 | 600 | 46 | 54 | 31 |
| 15 | 3°C | Ether iso | 33 | 67 | 89 | 5300 | 33 | 67 | 48 |

*Déterminé par RMN du $^{29}Si$

$D^N$ = 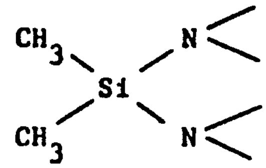

$T^N$ = 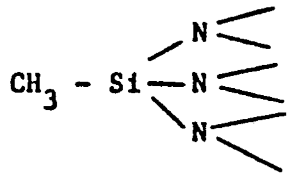

**Tableau V**

| Produit de départ + exemple | Exemple | Durée de polymérisation | T(°C) de polymérisation | Milieu de polymérisation | Rdt de la polymérisation % | * % de volatils du produit obtenu | Viscosité mPa.s ou aspect | ** Rapport $T^N/D^N$ | Rdt TGA (%) |
|---|---|---|---|---|---|---|---|---|---|
| 13 | | | | | | 47 | 90 | 1,04 | 33 |
| | $16_1$ | 0 h 30 | 140 | masse | 98 | 8 | Gomme dure | 1,00 | 84 |
| | $16_2$ | 1 h 00 | 140 | masse | 97 | 6 | Produit dur cassant | 0,96 | 80 |
| 13 | $16_3$ | 3 h 15 | 140 | masse | 94 | 2 | Produit dur cassant | 0,92 | 80 |
| | $16_4$ | 21 h 00 | 140 | masse | 93 | 0 | Produit dur cassant | 0,92 | 82,5 |
| 14 | | | | | | 47 | 600 | 1,17 | 31 |
| | $17_1$ | 6 h 00 | 120 | *** | 95 | 2 | Solide | 1,17 | 85 |
| 14 | $17_2$ | 1 h | 140 | masse | 97 | 5 | Solide | 1,20 | 81 |
| 15 | | | | | | 16 | 5300 | 2,00 | 48 |
| 15 | 18 | 6 h 00 | 120 | *** | 95 | 1 | solide | 1,95 | 86 |

* volatils (30 min. à 170° C sous 1,3 mbar)
** Déterminé par RMN du $^{29}Si$
*** 40 % dans le toluène

De ces exemples, il apparaît que le réarrangement cationique est rapide et qu'il permet de diminuer fortement le taux de volatils en les intégrant à l'ensemble du réseau. La viscosité du produit augmente rapidement et à température ambiante le coammonolysat polymérisé a l'aspect d'un solide dur et cassant, soluble dans les solvants usuels tels que le toluène, l'éther isopropylique, le xylène ...

Le résultat le plus important est la forte augmentation du rendement en céramique mesuré par TGA.

**Exemples 19, 20 et 21**

Les produits de ces exemples sont obtenus par dévolatilisation des coammonolysats des exemples 13 et 14 ou du coammonolysat polymérisé de l'exemple $17_1$.

Le prélèvement des volatils est effectué sous vide de 1,3 mbar à 170° C pendant 30 min. Les produits volatils sont principalement constitués de molécules cyliques ou polycycliques de faible masse moléculaire composées de motifs $T^N$ et $D^N$, mais avec un rapport $T^N/D^N$ inférieur à celui du coammonolysat moyen.

Les résultats sont rassemblés dans le tableau VI ci-après:

**Tableau VI**

| Produit de départ + exemple | Exemple | Rdt de dévolatisation % | Ascpect ou viscosité mPa.s | Rapport $T^N/D^N$ | Rdt TGA % |
|---|---|---|---|---|---|
| 13 | | | 90 | 1,04 | 33 |
| 13 | 19 | 53 | Gomme dure | 1,70 | 65 |
| 14 | | | 600 | 1,17 | 31 |
| 14 | 20 | 53 | Gomme dure | 1,82 | 64 |
| $17_1$ | | | Solide | 1,17 | 85 |
| $17_1$ | 21 | 98 | Solide | 1,19 | 88 |

On remarque que la dévolatilisation permet d'obtenir des produits plus visqueux que les coammonolysats de départ et donnent des rendements TGA élevés pour la partie des non-volatils. Mais contrairement à la polymérisation, ce résultat est obtenu en modifiant fortement le rapport $T^N/D^N$ du produit.

De même, l'amélioration du rendement TGA n'est qu'apparente car ramené au coammonolysat de départ, le rendement en céramique est inchangé.

Inversement le procédé selon l'invention en incorporant les molécules de faibles masses moléculaires à l'ensemble du réseau permet d'améliorer le rendement réel en céramique.

Ceci est illustré par le tableau VII ou 100 g de coammonolysat de l'exemple 14 subissent l'une des 4 voies suivantes:

- une pyrolyse directe (a)
- une dévolatilisation suivie d'une pyrolyse du résidu (b)
- un traitement à l'acide $CF_3$ $SO_3$ H suivi d'une dévolatilisation et d'une pyrolyse (c)
- un traitement à l'acide $CF_3$ $SO_3$ H suivie d'une pyrolyse (d).

**Tableau VII**

| Voie | Poids engagé (g) | Traitement acide | Poids après traitement acide (g) | Dévolatilisation | Poids après dévolatilisation (g) | Poids de cérmique après pyrolyse (g) |
|---|---|---|---|---|---|---|
| a | 100 | NON | - | NON | - | 31 |
| b | 100 | NON | - | OUI | 53 | 33,9 |
| c | 100 | OUI | 96 | NON | - | 80,6 |
| d | 100 | OUI | 96 | OUI | 94 | 82,7 |

Il ressort nettement du tebleau VII l'influence du traitement acide du coammonolysat sur le quantité de céramique formée et l'équivalence existant entre le dévolatilisation et le début de la pyrolyse.

**Exemples 22 et 23**

Le produit de l'exemple 22 est obtenu par coammonolyse à 20°C dams l'éther isopropylique sec (1200 ml) de 0,375 mole de $(CH_3)_2$ $SiCl_2$ (48,4 g) et 0,562 mole (128,3 g) d'un mélange de méthylchlorodisilane de formule moyenne:

$(CH_3)_{2,48}$ $Si_2$ $Cl_{3,52}$

constitué en % molaire de:

- $CH_3Cl_2$ Si Si $CH_3$ $Cl_2$ soit $(CH_3)_2$ $Si_2$ $Cl_4$ : 59 %
- $CH_3$ $Cl_2$ Si Si $(CH_3)_2$ Cl soit $(CH_3)_3$ $Si_2$ $Cl_3$ : 34 %
- mélange de $(CH_3)_2$ ClSiSi $CH_3$ Cl et de $CH_3$ $Cl_2SiSi(CH_3)_3$

soit $(CH_3)_4$ $Si_2$ $Cl_2$ : 7 %

soit une fonctionnalité moyenne du coammonolysat $f^N{}_m = 2{,}91$

Le produit obtenu avec un rendement de 90 % a une viscosité de 50 000 mPa.s.

Le produit de l'exemple 23 est synthétisé par traitement acide du coammonolysat de l'exemple 22. La réaction est menée en masse à 130°C pendant 3 h 00 en présence de 4500 ppm de $CF_3$ $SO_3$ H. le rendement pondéral de la polymérisation est de 94 %. Le produit obtenu se présente sous la forme d'un solide dur et cassant, soluble dans les solvants usuels.

L'incorporation de motifs disilaniques dans le produit de l'exemple 22 permet d'obtenir un réticulat présentant un rendement céramique TGA nettement amélioré (Tableau VIII) par rapport aux coammonolysats de $CH_3$ Si $Cl_3$ et $(CH_3)_2$ Si $Cl_2$ seuls (exemples : 13, 14, 15). Il apparaît possible de synthétiser à l'aide de chlorodisilanes des coammonolysats de fonctionnalité élevée sans gélification du produit qui ferait chuter le

rendement de coammonolyse.

Après traitement acide du coammonolysat disilanique, on améliore le rendement TGA lors de la pyrolyse en passant d'un rendement TGA de 84 % à 92 % (produit de l'exemple 23).

**Tableau VIII**

| Coammonolysat de départ Exemple | Produit polymérisé Exemple | Fonctionnalité moyenne | Rdt TGA % |
|---|---|---|---|
| 13 | | 2,51 | 33 |
| 13 | $16_2$ | 2,49 | 80 |
| 14 | | 2,54 | 31 |
| 14 | $17_1$ | 2,54 | 85 |
| 15 | | 2,67 | 48 |
| 15 | 18 | 2,66 | 86 |
| 22 | | 2,91 | 84 |
| 22 | 23 | 2,90 | 92 |

**Exemples 24, 25, 26, 27 et 28**

Pour ces exemples, on effectue une copolymérisation d'un ammonolysat de $(CH_3)_2Si\ Cl_2$ avec un ammonolysat de $CH_3\ Si\ Cl_3$. La réaction est catalysée par $CF_3\ SO_3\ H$ à une teneur de 1000 ppm pendant 1 h à 110°C. Les résultats portés dans le tableau IX ci-après montrent qu'une augmentation du rapport $T^N/D^N$ provoque une augmentation du rendement en polymère et du rendement TGA.

**Tableau IX**

| Exemple | % molaire $D^N$ | % molaire $T^N$ | RR % polymère | Rdt TGA % | RR x TGA/100* % |
|---|---|---|---|---|---|
| 24 | 100 | 0 | 23 | 7 | 2 |
| 25 | 67 | 33 | 52 | 67 | 35 |
| 26 | 47 | 53 | 81 | 79 | 64 |
| 27 | 31 | 69 | 86 | 87 | 74 |
| 28 | 0 | 100 | 100 | 73 | 73 |

* Le produit RR x TGA/100 représente le poids de céramique obtenu pour 100 g de silazane de départ.

**Exemple 29**

L'exemple décrit ci-après montre qu'il est possible de réarranger un polydiméthylsilazane (obtenu par polymérisatiom de $D^N{}_3$ par $CF_3SO_3H$ selon l'exemple 9) avec un ammonolysat de $CH_3SiCl_3$.

Les résultats sont rassemblés dans le tableau X ci-après:

**Tableau X**

| Exemple | % molaire $D^N$ | % molaire $T^N$ | RR % polymère | Rdt TGA % | RR x TGA/100 % |
|---|---|---|---|---|---|
| 29 | 66 | 33 | 70 | 70 | 49 |

Le réarrangement est catalysé par $CF_3\ SO_3\ H$ à une teneur de 1275 ppm pendant 1 h 00 à 110°C. Le poids de céramique obtenu pour 100 g de silazane est bien supérieur à celui obtenu dans le cas de polydiméthylsilazane seul (49 contre 2; exemple 24).

**Revendications**

1. Procédé de traitement d'un polysilazane, caractérisé en ce qu'on traite catalytiquement en phase homogène un polysilazane choisi parmi un organopolysilazane et un organopoly(disilyl)silazane et leurs mélanges, dans lesquels les radicaux organiques liés aux atomes de silicium sont des radicaux hydrocarbonés saturés ou aromatiques et exempts d'atome d'hydrogène lié directement aux atomes de silicium, en présence d'une quantité catalytiquement efficace d'un catalyseur acide choisi parmi $HClO_4$ et $CF_3\ SO_3\ H$.

2. Procédé selon la revendication 1, caractérisé en ce que la réaction s'effectue en masse.

3. Procédé selon la revendicetion 1, caractérisé en ce que la réaction s'effectue en solution dans un solvant organique.

4. Procédé selon l'une quelconque des revendications précédentes, caractérisé en ce que l'acide est utilisé à des teneurs comprises entre 10 et 10000 ppm par rapport au poids du seul polysilazane de départ.

5. Procédé selon l'une quelconque des revendications précédentes caractérisé en ce que la température de polymérisation est comprise entre la température ambiante et 180° C.

6. Procédé selon l'une quelconque des revendications précédentes caractérisé en ce que la durée de la réaction de polymérisation est comprise entre 30 min. et 30 h.

7. Procédé selon l'une quelconque des revendications précédentes caractérisé en ce que le traitement est effectué sous pression normale, sous pression ou sous vide.

8. Procédé selon l'une quelconque des revendications précédentes caractérisé en ce qu'on désactive l'acide par l'addition d'une quantité suffisante de base pour neutraliser l'acide.

9. Polysilazane susceptible d'être obtenu par la mise en oeuvre d'un procédé tel que défini à l'une quelconque des revendications 1 à 8.

**Patentansprüche**

1. Verfahren zur Behandlung eines Polysilazans, dadurch gekennzeichnet, daß ein Polysilazan aus der Gruppe der Organopolysilazane, Organopoly(disily)-silazane und deren Gemische, in denen die an die Siliziumatome gebundenen, organischen Radikale gesättigte oder aromatische Kohlenwasserstoffradikale sind und kein Wasserstoffatom direkt an Siliziumatome gebunden ist, in Anwesenheit einer katalytisch wirksamen Menge eines unter $HC10_4$ und $CF_3SO_3H$ gewählten, sauren Katalysators in homogener Phase katalystisch behandelt wird.

2. Verfahren nach Patentanspruch 1, dadurch gekennzeichnet, daß die Reaktion ohne Lösungsmittel durchgeführt wird.

3. Verfahren nach Patentanspruch 1, dadurch gekennzeichnet, daß die Reaktion in Lösung in einem organischen Lösungsmittel durchgeführt wird.

4. Verfahren nach irgendeinem der vorhergehenden Patentansprüche, dadurch gekennzeichnet, daß die Säure in einer Menge zwischen 10 und 10000 ppm bezogen auf das Gewicht des ursprünglichen Polysilazans verwendet wird.

5. Verfahren nach irgendeinem der vorhergehenden Patentansprüche, dadurch gekennzeichnet, daß die Polymerisationstemperatur zwischen Raumtemperatur und 180° C liegt.

6. Verfahren nach irgendeinem der vorhergehenden Patentansprüche, dadurch gekennzeichnet, daß die Dauer der Polymerisationsreaktion zwischen 30 min und 30 h liegt.

7. Verfahren nach irgendeinem der vorhergehenden Patentansprüche, dadurch gekennzeichnet, daß die Behandlung bei Normaldruck, erhöhtem Druck oder im Vakuum durchgeführt wird.

8. Verfahren nach irgendeinem der vorhergehenden Patentansprüche, dadurch gekennzeichnet, daß die Säure durch Zugabe einer zur Neutralisierung der Säure ausreichenden Menge einer Base desaktiviert wird.

9. Polysilazan, das, durch Anwendung eines Verfahrens hergestellt werden kann wie es in irgendeinem der Patentansprüche 1 bis 8 angegeben wird.

**Claims**

1. Process for the treatment of a polysilazane, characterized in that catalytic treatment takes place in the homogeneous phase of a polysilazane chosen from among an organopolysilazane and an organopoly(disilyl)silazane and mixtures thereof, in which the organic radicals bonded to the silicon atoms are saturated or aromatic hydrocarbon radicals and which are free from a hydrogen atom bonded directly to the silicon atoms, in the presence of a catalytically effective quantity of an acid catalyst chosen from among $HClO_4$ and $CF_3SO_3H$.

2. Process according to claim 1, characterized in that the reaction takes place in the mass.

3. Process according to claim 1, characterized in that the reaction takes place in solution in an organic solvent.

4. Process according to any one of the preceding claims, characterized in that the acid is used at contents between 10 and 10,000 ppm based on the weight of the starting polysilazane alone.

5. Process according to any one of the preceding claims, characterized in that the polymerization temperature is between ambient temperature and 180° C.

6. Process according to any one of the preceding claims, characterized in that the polymerization reaction lasts between 30 minutes and 30 hours.

7. Process according to any one of the preceding claims, characterized in that the treatment is performed under normal pressure, under pressure or under vacuum.

8. Process according to any one of the preceding claims, characterized in that the acid is deactivated by

adding an adequate base quantity forneutralizing the acid.

9. Polysilazane which can be obtained by performing a process like that defined in any one of the claims 1 to 8.